# FASCICULE DE BREVET EUROPEEN

(11) **EP 4 590 977 B1**
(45) Date de publication et mention de la délivrance du brevet: **09.09.2026**
(21) Numéro de dépôt: 23790375.2
(22) Date de dépôt: 20.09.2023
(51) Int. Cl.: F16C 11/06, F16C 23/04, F16C 33/10, F16C 33/20, F16C 33/28

(54) **ROTULE AUTOLUBRIFIANTE**
SELBSTSCHMIERENDES SPHÄRISCHES GLEITLAGER
SELF-LUBRICATING SPHERICAL PLAIN BEARING

(30) Priorité: 23.09.2022 FR 2209689
(43) Date de publication de la demande: 30.07.2025
(73) Titulaire: HYDROMECANIQUE ET FROTTEMENT, 42160 Andrézieux-Bouthéon (FR)
(72) Inventeur: MASSE, Emmanuel, 42110 FEURS (FR)
(74) Mandataire: Santarelli
(86) Numéro de dépôt international: PCT/FR2023/051435
(87) Numéro de publication internationale: WO 2024/062192

(56) Documents cités:
- EP-A1- 2 955 401
- EP-A2- 0 969 217
- WO-A1-2014/064366
- DE-A1- 102015 202 561
- JP-A- S60 151 414
- US-A- 2 958 927

## Description

### Domaine de l'invention

La présente invention se rapporte au domaine technique des articulations autolubrifiantes, et notamment des rotules autolubrifiantes utilisées dans le guidage en rotation de systèmes mécaniques.

L'invention trouve plus particulièrement son application pour tous les types de rotules nécessitant un fonctionnement sans graisse, c'est-à-dire en fonctionnement autolubrifiant et travaillant sous fortes charges en régime dynamique.

L'invention peut notamment être utilisée dans le cadre d'un système d'essieu, d'un système de transmission.

### Etat de la technique antérieure

Une liaison rotule est généralement composée d'une sphère et d'une cage, le contact entre la sphère et la cage étant de forme sphérique. Elle peut avoir des caractéristiques propres, tel que le fait d'être autolubrifiante ou d'admettre un jeu plus ou moins important entre la sphère et la cage.

Une contrainte apparaissant dans la réalisation d'une rotule est le montage de la sphère dans la cage. Il est donc connu de mettre en œuvre une cage déformable, sous la forme d'une pièce présentant des faiblesses mécaniques, ou en plusieurs parties afin de permettre le montage de la sphère dans la cage. Ainsi, le montage de la sphère dans la cage peut être réalisé suivant différents principes de rotule connus qui sont cités ci-après :
- cage en deux parties qui sont vissées autour de la sphère ;
- cage fendue et assemblée en force avec la sphère ;
- cage présentant des encoches permettant de faire entrer la sphère lors du montage ;
- cage formée par déformation à froid sur la sphère.

Le document EP1608881 décrit une rotule autolubrifiante comprenant une sphère et une cage, la sphère étant en métal et étant montée mobile en rotation dans la cage. La cage de cette rotule autolubrifiante est formée en plusieurs parties, avec une partie intérieure en métal sertie sur la sphère, une partie en élastomère posée sur la partie intérieure en métal, et une partie extérieure sertie sur la partie en élastomère, de sorte que la cage enserre la sphère.

Un inconvénient d'une telle rotule autolubrifiante est qu'elle induit une contrainte de montage du fait qu'il est nécessaire de prévoir des parties de cage qui sont suffisamment déformables à froid de sorte que la cage enserre convenablement la sphère. Cela induit inévitablement une faible résistance mécanique de la cage en acier compte tenu de sa forte déformabilité mais également un jeu résiduel difficilement maitrisable. Cette rotule induit en outre une complexité d'assemblage avec la nécessité de mettre en œuvre des opérations de sertissage et de vulcanisation d'élastomère au sein de celle-ci de sorte à limiter le jeu dans la rotule autolubrifiante ainsi montée. Ce système d'élastomère peut limiter le fonctionnement de la rotule du fait de sa faible résistance au cisaillement.

Par ailleurs, une telle rotule est composée de matériaux sensibles à la corrosion ce qui peut être problématique si la rotule est utilisée pour certaines applications soumises à celle-ci. La maintenance voire le remplacement de cette rotule implantée au sein d'un système engendre également des coûts importants ainsi que du temps d'immobilisation du système.

Les demandes WO2014169942A1 et EP 2986862B1 décrivent une rotule comprenant une sphère montée mobile dans une cage, ces deux éléments étant métalliques. La cage est ici formée en une pièce. La sphère comporte plusieurs zones d'affaiblissement ménagées sur son pourtour ce qui la rend déformable, de sorte à pouvoir être logée dans la cage.

Un inconvénient d'une telle rotule est que la déformabilité de la sphère engendre une fragilité mécanique au niveau des zones d'affaiblissement ainsi qu'un jeu résiduel difficilement contrôlable. Par ailleurs, une telle rotule est composée d'une sphère et une cage qui sont en matériaux sensibles à la corrosion ce qui engendre un risque de détérioration rapide de la rotule.

La demande de brevet EP0969217 décrit une rotule dans laquelle la sphère et la cage sont en matériau composite. Toutefois, une telle rotule présente plusieurs inconvénients. Tout d'abord, les surfaces de frottement sont constituées d'une unique couche de matériau autolubrifiant qui comporte donc inévitablement une zone de faiblesse au niveau de la jonction entre les bords du tissu. Par ailleurs, la sphère et la cage sont réalisées à partir d'une résine renforcée par des filaments de verre, matériau qui présente une résistance mécanique relativement limitée au vu des contraintes subies par une telle rotule en fonctionnement.

Les documents DE102015202561A1 et EP2955401A1 décrivent des rotules comprenant une sphère et une cage, la cage comportant un empilement de plusieurs couches de matériau composite comprenant un complexe autolubrifiant, cet empilement étant supporté par une coque, typiquement en métal.

Il existe donc un besoin d'améliorer l'existant de sorte à résoudre au moins en partie les inconvénients de l'art antérieur.

### Exposé de l'invention

L'invention concerne une rotule autolubrifiante comprenant une sphère et une cage, ladite sphère étant montée mobile en rotation dans ladite cage, ladite cage étant monobloc, et comportant un premier empilement composé d'une pluralité de couches de matériau composite, le matériau composite comprenant un complexe autolubrifiant comportant un tissu et une résine imprégnant ce tissu, ladite cage comportant une coque de renfort entourant ledit premier empilement et formée à partir d'un deuxième empilement de plusieurs couches comportant au moins un matériau composite comprenant un complexe comportant une fibre et une résine imprégnant ladite fibre.

Une cage qui forme un volume monobloc et qui comporte un empilement de plusieurs couches de matériau composite comprenant un complexe autolubrifiant permet d'avoir un contact autolubrifiant entre la cage et la sphère, sans présenter de point d'affaiblissement ou de sens de montage tels qu'une orientation spécifique liée à la ligne de rupture comme c'est le cas dans l'art antérieur pour les cages fendues, ou dû à la position de l'encoche comme c'est le cas dans l'art antérieur pour les cages à encoches, ce qui permet d'améliorer la résistance mécanique par rapport à une rotule de l'art antérieur.

Selon un aspect d'au moins un mode de réalisation de l'invention, le volume de la cage peut être de section constante.

De ce fait, la cage présente une continuité sur toute l'étendue de son volume et ne présente donc pas de zone de rupture, telle qu'une encoche ou un vide.

L'intérêt d'un tel volume de section constante est de fournir une section de frottement, entre la cage et la sphère, sans discontinuité.

Le fait d'avoir plusieurs couches permet également d'éviter les lignes de rupture formées au niveau de la jointure entre les deux extrémités de tissu d'une couche unique.

L'épaisseur du tissu qui forme ces couches peut être choisie relativement fine, de sorte à augmenter la résistance mécanique du complexe autolubrifiant.

En outre, une cage accommodée à la sphère, ou appairée à la sphère, permet d'obtenir un jeu maitrisé entre la sphère et la cage.

Notamment, cela permet d'obtenir une rotule autolubrifiante avec un jeu possiblement très réduit entre la sphère et la cage par rapport aux rotules de l'art antérieur.

Une cage accommodée à la sphère permet également d'éviter une détérioration de la cage par la sphère.

En outre, et du fait de la mise en œuvre d'un matériau composite, la résistance à la corrosion de la cage est augmentée par rapport à l'art antérieur puisqu'un tel matériau est peu, voire pas, sensible à la corrosion.

Le terme sphère est ici employé pour désigner une pièce dont la forme correspond à un segment sphérique, autrement appelé tronçon de sphère, c'est-à-dire la forme obtenue après coupage, par deux plans qui sont ici parallèles d'une sphère. Plus particulièrement, ici, la forme du segment sphérique est obtenue après coupage d'une sphère par deux plans parallèles symétriques par rapport au centre de la sphère.

La cage possède une surface intérieure qui a également la forme d'un segment sphérique. Sa surface extérieure peut avoir une forme correspondant à un segment sphérique obtenu par coupage d'une sphère par deux plans parallèles symétriques par rapport au centre de la sphère, ou encore une forme correspondant à une surface cylindrique.

Selon certains modes de réalisation, on pourrait imaginer que les deux plans ne soient pas parallèles et symétriques par rapport au centre de la sphère.

Par volume de section constante, on comprend que la cage présente une continuité sur toute l'étendue de son volume et ne présente donc pas de zone de rupture, telle qu'une encoche ou un vide.

Selon un aspect d'au moins un mode de réalisation de l'invention, ledit complexe autolubrifiant comporte au moins une bande ayant une épaisseur comprise entre 20µm et 200µm.

Cette bande de complexe autolubrifiant est déposée et forme les couches du premier empilement.

Dans cette bande de complexe autolubrifiant, le tissu est imprégné de résine avant d'être déposé pour former les couches du premier empilement.

Il est à noter que la résine peut comporter des charges.

Par exemple, la résine peut comporter des charges lubrifiantes.

L'utilisation de bandes de complexe autolubrifiant qui sont relativement fines permet de mieux contrôler la quantité de complexe autolubrifiant déposée à un endroit donné sur la surface de la cage, et donc de mieux contrôler l'épaisseur du premier empilement en un point donné.

Par exemple, cela peut permettre d'obtenir une cage comportant un premier empilement ayant une homogénéité de matière du fait de l'utilisation de bandes relativement fines.

En outre, une meilleure résistance aux efforts tangentiels de frottement peut être obtenue grâce à un croisement des couches de complexe autolubrifiant.

De ce fait, selon un aspect d'au moins un mode de réalisation de l'invention, ledit premier empilement comporte des croisements de bandes de complexe autolubrifiant selon un angle compris entre 0° et 90°.

A noter que le tissu destiné à être mélangé avec la résine peut être constitué par un taffetas, un satin, un sergé ou une toile sans exclure d'autres configurations de tissu.

Selon l'invention, la coque de renfort fait office de protection pour la cage, en formant un renfort extérieur et donc en apportant une résistance mécanique supplémentaire qui permet de limiter la déformation mais aussi la dilatation thermique de la cage lors du fonctionnement de la rotule autolubrifiante.

Selon un aspect d'au moins un mode de réalisation de l'invention, ladite coque de renfort est formée à partir d'un deuxième empilement de plusieurs couches comportant au moins un matériau composite comprenant un complexe comportant une fibre et une résine imprégnant ladite fibre.

Selon un aspect particulier d'au moins un mode de réalisation de l'invention, ledit complexe étant choisi parmi :
- un complexe comportant une fibre de carbone ;
- un complexe comportant une fibre de verre ;
- un complexe comportant une fibre de kevlar ;
- un complexe autolubrifiant ;
- un mélange des matériaux précédents.

La fibre peut également être un composant d'un tissu, c'est-à-dire que le au moins un matériau composite comprend un complexe comportant un tissu composé d'une pluralité de fibres, et une résine imprégnant cette pluralité de fibres.

Par ailleurs, la résine peut être choisie parmi une résine thermodurcissable ou une résine thermoplastique.

La résine thermodurcissable peut être une résine époxy, vinylester, polyester, phénolique, ou polyimide.

La résine thermoplastique peut être par exemple une résine de type polyamide (PA6), polyéthercétonecétone (PEKK), ou polyétheréthercétone (PEEK).

Selon un aspect de l'invention, il peut avoir entre le premier et le deuxième empilement une certaine épaisseur de transition où les tissus du premier et du deuxième empilement sont alternés. Cela permet d'éviter une interface trop nette entre les deux empilements.

Selon un aspect d'au moins un mode de réalisation de l'invention, ladite sphère est composée au moins en partie en un matériau anticorrosion.

Une sphère composée au moins en partie en un matériau anticorrosion participe à une amélioration de la résistance à la corrosion de la rotule autolubrifiante.

Selon un aspect d'au moins un mode de réalisation de l'invention, ledit matériau anticorrosion de la sphère comporte au moins un matériau parmi :
- un métal anticorrosion ;
- un alliage anticorrosion ;
- un métal avec traitement anticorrosion ;
- un alliage avec traitement anticorrosion ,
- un matériau traité par nitruration en bain de sel ;
- un matériau composite.

On désigne par alliage un mélange homogène solide constitué d'un métal et d'une ou plusieurs autres substances, ces autres substances pouvant être métalliques ou non métalliques.

Les alliages et métaux anticorrosion présentent une capacité naturelle à résister à la corrosion. Les métaux et alliages avec traitement anticorrosion ne présentent pas de capacité naturelle à résister convenablement à la corrosion et subissent donc un traitement pour améliorer leur tenue à la corrosion.

L'invention a également pour objet l'utilisation d'un matériau composite comprenant un complexe autolubrifiant comportant un tissu et une résine imprégnant le tissu, pour la réalisation de plusieurs couches d'un premier empilement d'une cage de rotule autolubrifiante.

### Présentation des figures

L'invention, ainsi que les différents avantages qu'elle présente, seront plus facilement compris à la lumière de la description qui va suivre d'un mode de réalisation illustratif et non limitatif de celle-ci, et des dessins annexés parmi lesquels :
La figure 1 est une vue en perspective de dessus d'une rotule autolubrifiante selon un mode de réalisation de l'invention ;
La figure 2 est une vue en perspective latérale d'une rotule autolubrifiante selon le mode de réalisation de la figure 1 ;
La figure 3 est une autre vue en perspective latérale d'une rotule autolubrifiante selon le mode de réalisation de la figure 1 ;
La figure 4a est une vue schématique latérale d'une rotule autolubrifiante selon le mode de réalisation de la figure 1 ;
La figure 4b est une vue schématique en perspective d'une rotule autolubrifiante selon le mode de réalisation de la figure 4a ;
La figure 4c est une vue schématique de face d'une rotule autolubrifiante selon le mode de réalisation de la figure 4a ;
La figure 4d est une vue schématique latérale en coupe d'une rotule autolubrifiante selon le mode de réalisation de la figure 4a ;
La figure 5a est une vue schématique de face d'une sphère selon le mode de réalisation de la figure 1 ;
La figure 5b est une vue schématique latérale en coupe d'une sphère selon le mode de réalisation de la figure 5a ;
La figure 5c est une vue schématique en perspective d'une sphère selon le mode de réalisation de la figure 5a ;
La figure 6a est une vue schématique de face d'un premier empilement selon le mode de réalisation de la figure 1 ;
La figure 6b est une vue schématique latérale en coupe d'un premier empilement selon le mode de réalisation de la figure 6a ;
La figure 6c est une vue schématique en perspective d'un premier empilement selon le mode de réalisation de la figure 6a ;
La figure 7a est une vue schématique de face d'une coque de renfort selon le mode de réalisation de la figure 1 ;
La figure 7b est une vue schématique latérale en coupe d'une coque de renfort d'une cage selon le mode de réalisation de la figure 7a, et
La figure 7c est une vue schématique en perspective d'une coque de renfort d'une cage selon le mode de réalisation de la figure 7a.

### Description détaillée d'un mode de réalisation de l'invention

Le principe général de l'invention repose sur la mise en œuvre d'une rotule autolubrifiante comprenant une cage et une sphère, et ayant une résistance à la corrosion augmentée par rapport à l'art antérieur du fait que la cage est peu, voire pas, sensible à la corrosion. En outre, le principe de l'invention repose également sur la mise en œuvre d'une rotule autolubrifiante avec un jeu maitrisé et prédéterminé entre la cage et la sphère.

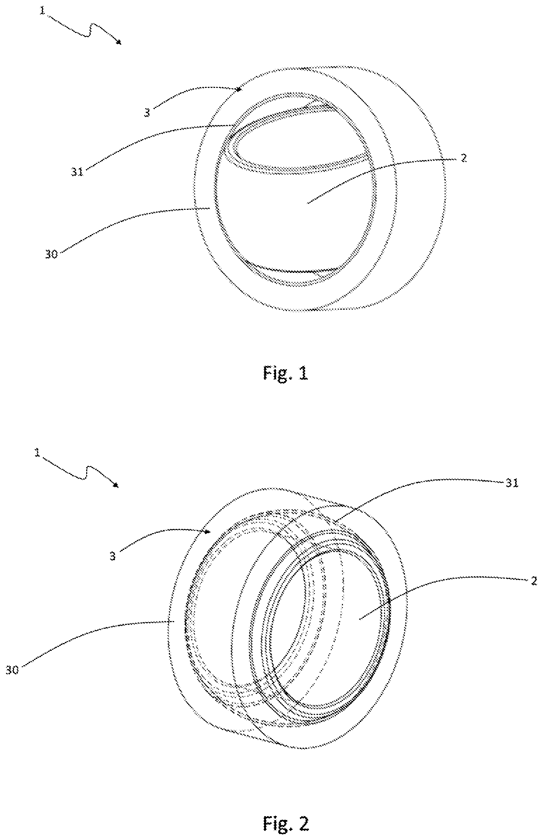

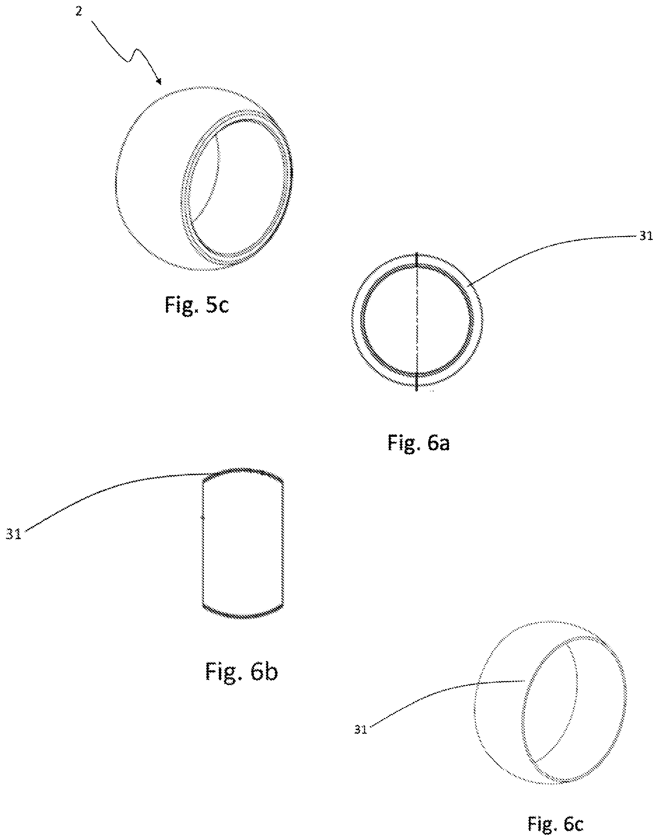

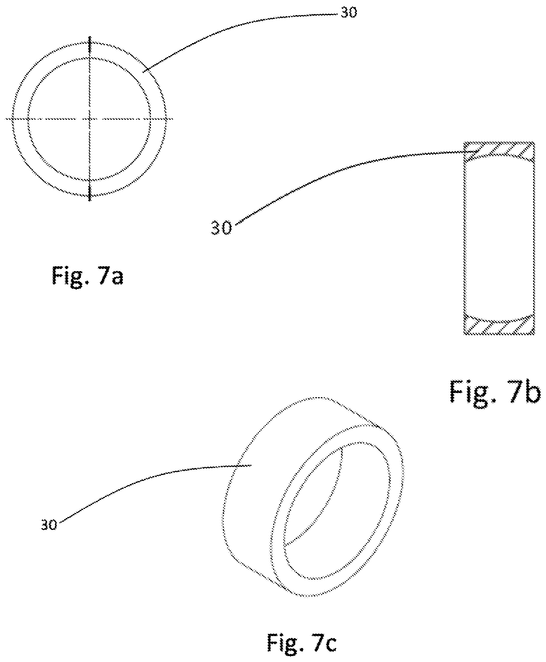

On présente maintenant, en relation avec les figures 1 à 7c, un mode de réalisation d'une rotule autolubrifiante selon l'invention.

Comme illustré par ces figures, la rotule autolubrifiante 1 comprend une sphère 2 et une cage 3. Comme visible, la sphère 2 est montée mobile en rotation dans la cage 3. Selon l'invention, cette cage 3 est monobloc.

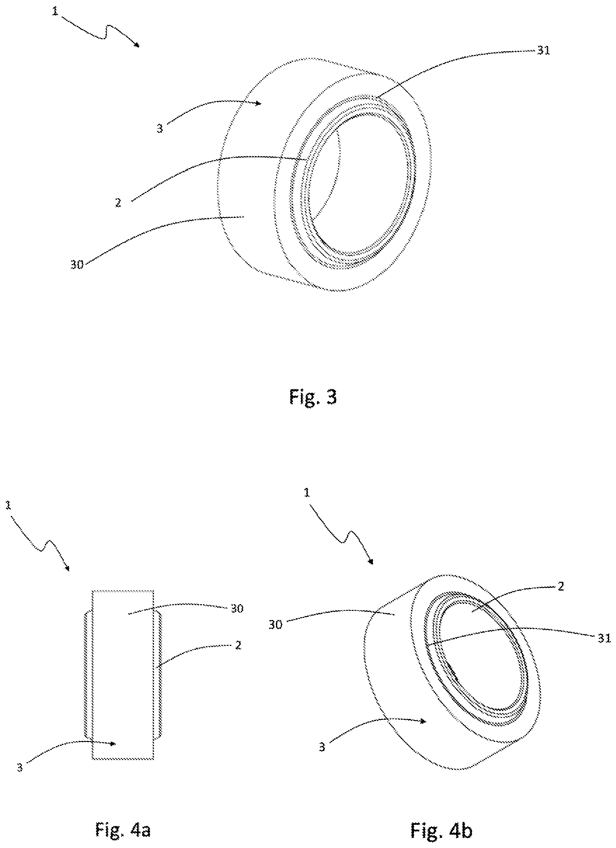

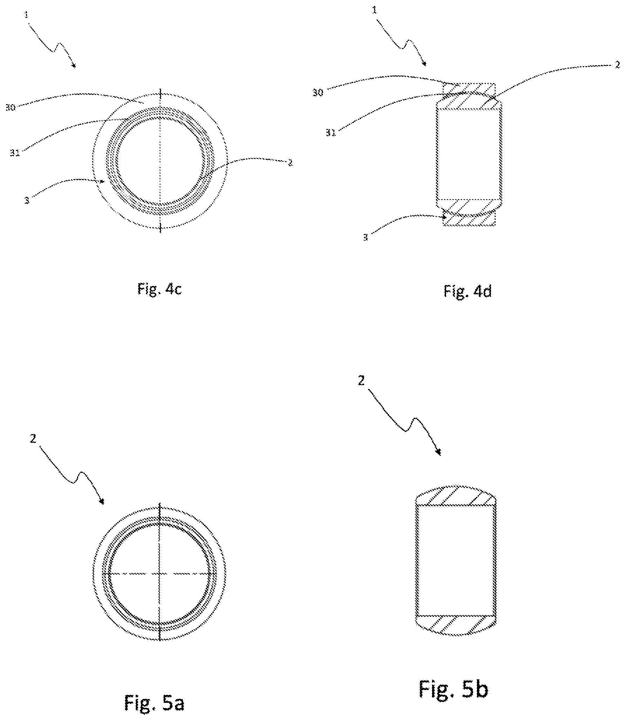

En outre, dans ce mode de réalisation, cette cage présente un volume de section constante. La section de la cage (30) est par exemple visible dans la figure 4d.

En d'autres termes, cette cage est faite d'une pièce et ne présente pas de zone de rupture, telle qu'une encoche ou un vide.

Elle comporte un premier empilement 31 composé de plusieurs couches de matériau composite.

Ce matériau composite comprend un complexe autolubrifiant qui comporte un tissu ainsi qu'une résine imprégnant ce tissu.

Ainsi, l'invention repose sur l'utilisation d'un matériau composite comprenant un complexe autolubrifiant comportant un tissu et une résine imprégnant le tissu, pour la réalisation de plusieurs couches d'un premier empilement.

L'intérêt de l'utilisation d'un matériau composite pour cette application est que la résistance à la corrosion de la rotule autolubrifiante s'avère augmentée par rapport à l'art antérieur puisqu'un tel matériau est peu, voire pas, sensible à la corrosion.

En outre, un tel matériau composite permet d'obtenir une rotule autolubrifiante avec un jeu maîtrisé très réduit entre la sphère et la cage contrairement aux rotules autolubrifiantes de l'art antérieur, du fait que la cage est accommodée à la sphère.

Un tissu désigne ici une surface faite par assemblage d'une pluralité de fils. Ce tissu forme avec sa résine d'imprégnation une bande de complexe autolubrifiant. Ce complexe autolubrifiant combine un faible coefficient de frottement et une capacité à conserver de bonnes propriétés de frottement et mécaniques lorsque la rotule autolubrifiante est en fonctionnement.

La configuration relative des fils constitutifs du tissu peut être choisie de sorte à former entre les divers fils des canaux de passage pouvant être remplis par la résine.

Parmi les configurations courantes de tissu, on peut mettre en œuvre un tissu avec une configuration en sergé 2/2 formé de l'entrelacement de paires de fils de trame et de paires de fils de chaîne.

On peut également mettre en œuvre un tissu avec une configuration en taffetas qui présente une assez grande résistance grâce à un maximum d'entrecroisements des fils de chaîne et de trame.

Le tissu est, dans ce mode de réalisation, un tissu fait en polyester.

Les bandes de complexe autolubrifiant sont déposées et forment les couches du premier empilement 31.

La résine peut, par exemple, être une résine thermodurcissable ou thermoplastique.

La résine thermodurcissable peut être une résine époxy, vinylester, polyester, phénolique, ou polyimide.

Dans ce mode de réalisation, le complexe autolubrifiant se présente sous forme de bandes ayant une épaisseur comprise entre 20µm et 200µm.

La résine utilisée est, dans ce mode de réalisation, une résine époxy chargée de particules de lubrifiants.

Par ailleurs, selon les modes de réalisation, le complexe autolubrifiant est ménagé de telle sorte que le premier empilement 31 comporte des croisements de bandes de complexe autolubrifiant selon un angle compris entre 0° et 90°.

En d'autres termes, plusieurs bandes de complexe autolubrifiant peuvent être superposées, une bande formant un angle compris entre 0 et 90° avec une bande successive.

Dans le mode de réalisation illustré, le premier empilement 31 comporte des croisements de bandes de complexe autolubrifiant selon un angle supérieur ou égal à 5°, et inférieur à 90°.

Comme visible sur les différentes figures, la cage 3 comporte en outre une coque de renfort 30 entourant le premier empilement 31.

En d'autres termes, la coque de renfort forme un renfort extérieur, autrement appelé gaine ou armature, entourant le premier empilement 31. Cette coque de renfort 30 est formée à partir d'un deuxième empilement de plusieurs couches comportant au moins un matériau composite comprenant un complexe comportant une fibre et une résine imprégnant cette fibre.

Dans ce mode de réalisation, ce complexe est choisi parmi :
- un complexe comportant une fibre de carbone ;
- un complexe comportant une fibre de verre ;
- un complexe comportant une fibre de kevlar ;
- un complexe autolubrifiant ;
- un mélange des matériaux précédents.

Il est à noter que les couches peuvent au moins contenir un matériau composite comprenant un complexe comportant un tissu, composé d'une pluralité de fibres et une résine imprégnant ces fibres composant le tissu.

Quant à la résine, et de même que pour la cage, elle peut, par exemple, être choisie parmi les résines thermodurcissables ou thermoplastiques.

La résine thermodurcissable peut être une résine époxy, vinylester, polyester, phénolique, ou polyimide.

Cette coque de renfort a pour objectif de protéger la cage lorsque cette rotule autolubrifiante est sollicitée au sein d'un système en fonctionnement. En d'autres termes, elle forme un renfort extérieur et apporte une résistance mécanique supplémentaire qui permet de limiter la déformation mais aussi la dilatation thermique de la cage lors du fonctionnement de la rotule autolubrifiante, du fait qu'en condition de fonctionnement, la sollicitation de la rotule autolubrifiante entraine une hausse de la température de la cage et de la sphère. La coque de renfort permet ainsi de limiter la déformation et la dilatation de sorte à maitriser le jeu entre la cage et la sphère.

Dans ce mode de réalisation, la sphère est composée au moins en partie en un matériau anticorrosion de sorte à obtenir une rotule autolubrifiante qui est peu voire pas sensible à la corrosion.

Le fait d'avoir une sphère composée au moins en partie en un matériau anticorrosion permet de participer à une amélioration de la résistance à la corrosion de la rotule autolubrifiante, et donc à une amélioration de la durée de vie de la rotule autolubrifiante.

Ce matériau anticorrosion comporte au moins un matériau parmi :
- un métal anticorrosion ;
- un alliage anticorrosion ;
- un métal avec traitement anticorrosion
- un alliage avec traitement anticorrosion
- un matériau traité par nitruration en bain de sel, ou
- un matériau composite.

Par exemple, l'alliage anticorrosion peut être un Inox.

Une telle rotule autolubrifiante avec une sphère en un matériau avec traitement anticorrosion peut être réalisée par le biais d'un procédé de fabrication comprenant une étape de traitement anticorrosion d'un matériau composant ladite sphère.

Cette étape de traitement peut par exemple comprendre une étape de nitruration en bain de sel de sorte à améliorer les capacités de résistance à la corrosion du matériau.

Selon une alternative, l'étape de traitement peut comprendre une étape de nitrocarburation.

Ce procédé de fabrication peut comprendre, selon un mode de réalisation particulier, une étape de test de résistance à la corrosion du matériau obtenu.

Ensuite, ce procédé de fabrication comprend une étape d'assemblage de la sphère et de la cage de sorte à former la rotule autolubrifiante.

## Revendications

1. Rotule autolubrifiante (1) comprenant une sphère (2) et une cage (3), ladite sphère étant montée mobile en rotation dans ladite cage (3), ladite cage (3) étant monobloc et comportant un premier empilement (31) composé de plusieurs couches de matériau composite, le matériau composite comprenant un complexe autolubrifiant comportant un tissu et une résine imprégnant ledit tissu, et ladite cage (3) comportant une coque de renfort (30) entourant ledit premier empilement (31), **caractérisée en ce que** la coque de renfort (30) est formée à partir d'un deuxième empilement de plusieurs couches comportant au moins un matériau composite comprenant un complexe comportant une fibre et une résine imprégnant ladite fibre.

2. Rotule autolubrifiante (1) selon la revendication 1, **caractérisée en ce que** ledit complexe autolubrifiant comporte au moins une bande ayant une épaisseur comprise entre 20µm et 200µm.

3. Rotule autolubrifiante (1) selon l'une des revendications précédentes, **caractérisée en ce que** ledit premier empilement (31) comporte des croisements de bandes de complexe autolubrifiant selon un angle compris entre 0° et 90°.

4. Rotule autolubrifiante (1) selon l'une des revendications précédentes, **caractérisée en ce que** ledit complexe est choisi parmi :
- un complexe comportant une fibre de carbone ;
- un complexe comportant une fibre de verre ;
- un complexe comportant une fibre de kevlar ;
- un complexe autolubrifiant ;
- un mélange des matériaux précédents.

5. Rotule autolubrifiante (1) selon l'une des revendications précédentes, **caractérisée en ce que** ladite sphère (2) est composée au moins en partie en un matériau anticorrosion.

6. Rotule autolubrifiante (1) selon la revendication 5, **caractérisée en ce que** ledit matériau anticorrosion de ladite sphère (2) comporte au moins un matériau parmi :
- un métal anticorrosion ;
- un alliage anticorrosion ;
- un métal avec traitement anticorrosion ;
- un alliage avec traitement anticorrosion ;
- un matériau traité par nitruration en bain de sel, et
- un matériau composite.

7. Utilisation d'un matériau composite comprenant un complexe autolubrifiant comportant un tissu et une résine imprégnant ledit tissu, pour la réalisation de plusieurs couches d'un premier empilement d'une cage de rotule autolubrifiante selon l'une des revendications 1 à 6.

## Patentansprüche

1. Selbstschmierendes Kugelgelenk (1), umfassend eine Kugel (2) und einen Käfig (3), wobei die Kugel drehbar in dem Käfig (3) gelagert ist, wobei der Käfig (3) einstückig ist und einen ersten Stapel (31) umfasst, der aus mehreren Lagen eines Verbundmaterials zusammengesetzt ist, wobei das Verbundmaterial einen selbstschmierenden Verbund umfasst, der ein Gewebe und ein das Gewebe imprägnierendes Harz umfasst, und wobei der Käfig eine Verstärkungsschale (30) umfasst, die den ersten Stapel (31) umgibt, **dadurch gekennzeichnet, dass** die Verstärkungsschale (30) aus einem zweiten Stapel aus mehreren Lagen gebildet ist, die mindestens ein Verbundmaterial umfassen, das einen Verbund umfasst, der eine Faser und ein die Faser imprägnierendes Harz umfasst.

2. Selbstschmierendes Kugelgelenk (1) nach Anspruch 1, **dadurch gekennzeichnet, dass** der selbstschmierende Verbund mindestens einen Streifen mit einer Dicke zwischen 20 µm und 200 µm umfasst.

3. Selbstschmierendes Kugelgelenk (1) nach einem der vorhergehenden Ansprüche, **dadurch gekennzeichnet, dass** der erste Stapel (31) Kreuzverwebungen von Streifen des selbstschmierenden Verbunds unter einem Winkel zwischen 0° und 90° umfasst.

4. Selbstschmierendes Kugelgelenk (1) nach einem der vorhergehenden Ansprüche, **dadurch gekennzeichnet, dass** der Verbund ausgewählt ist aus:
- einem Verbund, der eine Kohlenstofffaser umfasst;
- einem Verbund, der eine Glasfaser umfasst;
- einem Verbund, der eine Kevlar-Faser umfasst;
- einem selbstschmierenden Verbund;
- einer Mischung der vorstehenden Materialien.

5. Selbstschmierendes Kugelgelenk (1) nach einem der vorhergehenden Ansprüche, **dadurch gekennzeichnet, dass** die Kugel (2) zumindest teilweise aus einem korrosionsbeständigen Material besteht.

6. Selbstschmierendes Kugelgelenk (1) nach Anspruch 5, **dadurch gekennzeichnet, dass** das korrosionsbeständige Material der Kugel (2) mindestens eines der folgenden Materialien umfasst:
- ein korrosionsbeständiges Metall;
- eine korrosionsbeständige Legierung;
- ein Metall mit Korrosionsschutzbehandlung;
- eine Legierung mit Korrosionsschutzbehandlung;
- ein durch Salzbadnitrieren behandeltes Material; und
- ein Verbundmaterial.

7. Verwendung eines Verbundmaterials, das einen selbstschmierenden Verbund umfasst, der ein Gewebe und ein das Gewebe imprägnierendes Harz umfasst, zur Herstellung mehrerer Lagen eines ersten Stapels eines Käfigs eines selbstschmierenden Kugelgelenks nach einem der Ansprüche 1 bis 6.

## Claims

1. Self-lubricating ball joint (1) comprising a ball (2) and a cage (3), said ball being rotatably mounted in said cage (3), said cage (3), being one-piece and including a first stack (31) composed of several layers of composite material, the composite material comprising a self-lubricating complex including a fabric and a resin impregnating said fabric, and said cage including a reinforcement shell (30) surrounding said first stack (31), **characterised in that** the reinforcement shell (30) is formed from a second stack of several layers including at least one composite material comprising a complex including a fibre and a resin impregnating said fibre.

2. Self-lubricating ball joint (1) according to claim 1, **characterised in that** said self-lubricating complex includes at least one strip having a thickness between 20µm and 200µm.

3. Self-lubricating ball joint (1) according to one of the preceding claims, **characterised in that** said first stack (31) includes cross-weavings of strips of self-lubricating complex according to an angle between 0° and 90°.

4. Self-lubricating ball joint (1) according to one of the preceding claims, **characterised in that** said complex is selected from:
- a complex including a carbon fibre;
- a complex including a glass fibre;
- a complex including a Kevlar fibre;
- a self-lubricating complex;
- a mixture of the above materials.

5. Self-lubricating ball joint (1) according to one of the preceding claims, **characterised in that** said ball (2) is composed at least partially of an anticorrosive material.

6. Self-lubricating ball joint (1) according to claim 5, **characterised in that** said anticorrosive material of said ball (2) includes at least one material from:
- an anticorrosive metal;
- an anticorrosive alloy;
- a metal with anticorrosive treatment;
- an alloy with anticorrosive treatment;
- a material treated by salt bath nitriding, and
- a composite material.

7. Use of a composite material comprising a self-lubricating complex including a fabric and a resin impregnating said fabric, for producing several layers of a first stack of a cage of a self-lubricating ball joint according to one of claims 1 to 6.
